# EUROPEAN PATENT APPLICATION

(11) **EP 3 459 608 A1**
(43) Date of publication of application: **27.03.2019**
(21) Application number: 17799208.8
(22) Date of filing: 09.05.2017
(51) Int. Cl.: A63H 11/00, A63H 13/04, A63H 17/00, A63H 17/26, A63H 30/04, B25J 5/00, B25J 19/00

(54) **ROBOT**

(30) Priority: 19.05.2016 JP 2016100090
(71) Applicant: Panasonic Intellectual Property Management Co., Ltd., Osaka-shi, Osaka 540-6207 (JP)
(72) Inventor: KOU Shiki, Osaka-shi, Osaka 540-6207 (JP); MIYAZAKI Ryouta, Osaka-shi, Osaka 540-6207 (JP); ISHII Masahiro, Osaka-shi, Osaka 540-6207 (JP); OGAWA Kento, Osaka-shi, Osaka 540-6207 (JP); KUNITAKE Yuji, Osaka-shi, Osaka 540-6207 (JP); HIGUCHI Seiya, Osaka-shi, Osaka 540-6207 (JP)
(74) Representative: Grünecker Patent- und Rechtsanwälte PartG mbB
(86) International application number: PCT/JP2017/017439
(87) International publication number: WO 2017/199783

(57) **Abstract**

In a case of responding via the output device, based on predetermined processing that requires a predetermined amount of time or more as to an input instruction by a user input via an input device, a robot causes a weight driving mechanism to be rotated to where the certain direction in which the weight driving mechanism reciprocally moves the weight is orthogonal to an advancing direction by the set of driving wheels, and causes the weight to be reciprocally driven in the certain direction orthogonal to the advancing direction, during the predetermined processing.

## Description

### Technical Field

The present disclosure relates to a robot that dialogs with a user.

### Background Art

Various types of robots have been proposed heretofore.

PTL 1 discloses a communication robot. The robot in PTL 1 determines, based on a degree of reliability that a speech recognition unit has calculated regarding input speech, whether or not to perform a reply-incapable action indicating that a reply cannot be given as to the speech that has been input. In a case of determining to perform the reply-incapable action, the reply-incapable action, which is to cock the head or the like for example, is selected from predetermined response actions that the communication robot is capable of. This prevents thinking out loud, unknown words, and sound other than speech, from being recognized as speech, and erroneously speaking (e.g., paragraphs [0004] through [0007], [0113]).

PTL 2 relates to a robot control device. The robot in PTL 2 recognizes speech input from a microphone at a speech recognition unit, and if the speech recognition fails or the reliability is low, performs predetermined actions such as cocking its head, cupping its hand to its ear, and so forth, for example (e.g., paragraphs [0003] through [0005]).

### Citation List

### Patent Literature

PTL 1: Japanese Unexamined Patent Application Publication No. 2011-227237
PTL 2: Japanese Unexamined Patent Application Publication No. 2002-116792

### Summary of Invention

### Technical Problem

Further improvement has been necessary in the above-described conventional technology.

### Solution to Problem

In order to solve the above problem, a robot according to an aspect of the present disclosure includes:
a spherical casing;
a frame that is disposed on an inner side portion of the casing;
an input device that is provided to the frame;
an output device that is provided to the frame;
a set of driving wheels that are provided to the frame, the driving wheels coming into contact with an inner circumferential face of the casing and rotating the casing;
a shaft that is provided to the frame, and extends in a perpendicular direction as to driving axes of the set of driving wheels;
a weight driving mechanism that is provided to the frame, and causes a weight to reciprocally move in a certain direction;
a rotating mechanism that causes the weight driving mechanism to rotate centered on the shaft; and
a control circuit that, in a case of responding via the output device, based on predetermined processing that requires a predetermined amount of time or more as to an input instruction by a user input via the input device, causes the weight driving mechanism to be rotated to where the certain direction in which the weight driving mechanism reciprocally moves the weight is orthogonal to an advancing direction by the set of driving wheels, and causes the weight to be reciprocally driven in the certain direction orthogonal to the advancing direction, during the predetermined processing.

### Advantageous Effects of Invention

According to the above aspect, further improvement has been realized. Brief Description of Drawings
Fig. 1 is an external perspective view of a robot according to a first embodiment of the present disclosure.
Fig. 2 is an internal perspective view of the robot according to the first embodiment of the present disclosure.
Fig. 3 is an internal side view of the robot according to the first embodiment of the present disclosure, as viewed from A in Fig. 2.
Fig. 4 is a side view of a forward advancing action of the robot according to the first embodiment of the present disclosure, as viewed from A in Fig. 2.
Fig. 5 is a plan view representing rotation actions of the robot according to the first embodiment of the present disclosure, as viewed from B in Fig. 2.
Fig. 6 is a perspective view illustrating rotating actions of the robot according to the first embodiment of the present disclosure.
Fig. 7 is a diagram illustrating a driving mechanism of a counterweight in the side view in Fig. 3.
Fig. 8A is a perspective view illustrating the actions of the driving mechanism of the counterweight when driving the counterweight in a predetermined linear direction.
Fig. 8B is a side view illustrating the actions of the driving mechanism of the counterweight when driving the counterweight in a predetermined linear direction.
Fig. 8C is a side view illustrating a state of the counterweight being reciprocally moved in a predetermined linear direction in the side view in Fig. 3.
Fig. 9A is a perspective view illustrating actions of the driving mechanism of the counterweight when rotating a swing arm.
Fig. 9B is a side view illustrating actions of the driving mechanism of the counterweight when rotating the swing arm.
Fig. 9C is a plan view illustrating a state of the swing arm of the robot according to the first embodiment of the present disclosure rotating, as viewed from B in Fig. 2.
Fig. 10 is a side view illustrating the attitude of the robot when the counterweight is situated toward the front as viewed from A in Fig. 2.
Fig. 11 is a side view illustrating the attitude of the robot when the counterweight is situated toward the rear as viewed from A in Fig. 2.
Fig. 12 is a frontal view illustrating the attitude of the robot when the counterweight is situated toward the right as viewed from C in Fig. 2.
Fig. 13 is a frontal view illustrating the attitude of the robot when the counterweight is situated toward the left as viewed from C in Fig. 2.
Fig. 14 is a diagram illustrating an example of a usage case of the robot according to the first embodiment of the present disclosure.
Fig. 15 is a diagram illustrating an example of the overall configuration of a robot system in which the robot according to the first embodiment of the present disclosure is applied.
Fig. 16 is a block diagram illustrating the robot according to the first embodiment of the present disclosure, and a cloud server to which the robot is connected.
Fig. 17 is a flowchart illustrating image recognition processing by the robot according to the first embodiment of the present disclosure.
Fig. 18 is a flowchart illustrating details of image recognition processing shown in S1709 of Fig. 17 in the first embodiment of the present disclosure.
Fig. 19 is a flowchart illustrating details of progress expression processing shown in S1707 of Fig. 17 in the first embodiment of the present disclosure.
Fig. 20 is a schematic diagram of the position of the counterweight.
Fig. 21 is a flowchart illustrating details of image recognition processing shown in S1709 of Fig. 17 in a second embodiment of the present disclosure.
Fig. 22 is a flowchart illustrating details of progress expression processing shown in S1707 of Fig. 17 in the second embodiment of the present disclosure.
Fig. 23 is a diagram illustrating the relationship between the position of the counterweight, and the stage indicated by a stage No. in image recognition processing.

### Description of Embodiments

### (Circumstances Leading to Invention of Aspect According to Present Disclosure)

First, a point of observation that led to an aspect according to the present disclosure will be described.

PTL 1 discloses a bipedal ambulatory human-type robot. This robot has a head, arms, legs, torso, and so forth. Accordingly, the robot can response to user speech by moving the head, arms, legs, and torso, based on recognition results of the input speech.

PTL 2 relates to a dog-type pet robot. The pet robot has a head, four legs, a tail, and so forth, provided to a body portion. Accordingly, the pet robot can response to user speech by moving the head, four legs, and tail, based on recognition results of input speech.

Thus, each type of robot has function of responding to queries by a user. In a case where speech recognition is used to respond to a query from a user as in the above-described PTLs 1 and 2, there is a need to set the time interval from when the user speaks to when the robot responds short enough, so the user will not think that the conversation between the user and the robot has broken off. Accordingly, it is conceivable that the robots are designed to respond within a relatively short time from the user speaking, regardless of whether the degree of reliability of the speech recognition results is high or low.

On the other hand, there are cases where the time interval from when the user speaks to when the robot responds is relatively long. As an example, a case is conceivable where the robot is queried regarding what an object that the user is holding is, and the robot responds using image recognition functions.

In a case of the robot responding to the query from the user using image recognition functions, an arrangement is conceivable where the object is imaged, and thereafter the imaged image is transmitted to an external server having image recognition functions for example, the image is recognized at the external server, the recognition results of the recognition are received from the external server, and a reply is made regarding what the object is, based on the recognition results that have been received. In this case, if the time taken from the user querying the robot until the robot replies to the user is around 15 seconds for example, the robot will make the user wait for the reply.

In a case where time during which the robot cannot respond to the query from the user continues for a predetermined number of seconds or longer in this way, there is a problem in that the user cannot judge whether the robot is currently performing processing, or does not move due to a malfunction, from the external appearance of the robot alone.

Also, in a case of assuming a spherical robot that does not have hands, feet, a head, or the like, unlike the above-described PTLs 1 and 2, the user cannot be notified that the robot is currently performing processing by moving hands and feet or cocking the head. Also, an arrangement where a display indicating that processing is currently being performed is made on the surface of the spherical robot is conceivable, but a display to this effect on the surface of the spherical robot that does not have hands, feet, head, and so forth, would be unnatural for the face of the robot, since a display that differs from facial components is displayed on the face of the spherical robot.

Thus, there is the problem that there are restrictions in communicating the progress state of internal processing to the user, in a case of a spherical robot that does not have hands, feet, head, and so forth.

Based on the above examination, the present inventor has reached the following aspects according to the present disclosure.

A robot according to an aspect of the present disclosure includes:
a spherical casing;
a frame that is disposed on an inner side portion of the casing;
an input device that is provided to the frame;
an output device that is provided to the frame;
a set of driving wheels that are provided to the frame, the driving wheels coming into contact with an inner circumferential face of the casing and rotating the casing;
a shaft that is provided to the frame, and extends in a perpendicular direction as to driving axes of the set of driving wheels;
a weight driving mechanism that is provided to the frame, and causes a weight to reciprocally move in a certain direction;
a rotating mechanism that causes the weight driving mechanism to rotate centered on the shaft; and
a control circuit that, in a case of responding via the output device, based on predetermined processing that requires a predetermined amount of time or more as to an input instruction by a user input via the input device, causes the weight driving mechanism to be rotated to where the certain direction in which the weight driving mechanism reciprocally moves the weight is orthogonal to an advancing direction by the set of driving wheels, and causes the weight to be reciprocally driven in the certain direction orthogonal to the advancing direction, during the predetermined processing.

According to this aspect, in a case where a response is made via the output device based on predetermined processing that takes a predetermined amount of time or longer with regard to an input instruction from the user that has been input via the input device, the driving mechanism of the weight is rotated during the predetermined processing, the certain direction in which the driving mechanism of the weight reciprocally moves the weight is made to be orthogonal to the advancing direction by the set of driving wheels, and the weight is reciprocally moved in the certain direction orthogonal to the advancing direction.

Accordingly, in a case where the robot needs a predetermined amount of time or more to respond to the query from the user, the robot performs an action of rocking to the left and right, with the advancing direction as the front. This action represents a body movement of the robot feeling troubled and rocking its body to the left and right.

Accordingly, even in a case of a spherical robot that does not have hands or feet, where there are restrictions in communicating the progress state of internal processing to the user, the user can be notified that the robot is currently performing processing during the conversation with the user using moving actions of the weight, without displaying that processing is being performed on the surface of the spherical robot. As a result, the user can tell whether the robot is currently performing processing or is not moving due to a malfunction, simply by viewing the external appearance of the robot.

### (Embodiments)

Embodiments of the present invention will be described below with reference to the drawings. Note that in the drawings, the same components are denoted by the same symbols.

### (First Embodiment)

### (Overall Configuration)

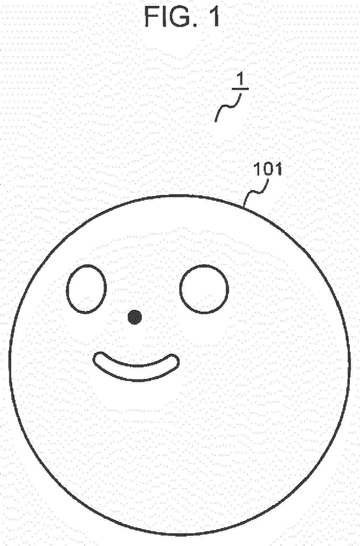

Fig. 1 is an external perspective view of a robot 1 according to a first embodiment of the present disclosure. The robot 1 has a spherical casing 101, as illustrated in Fig. 1. The casing 101 is made of a transparent material or translucent material, for example.

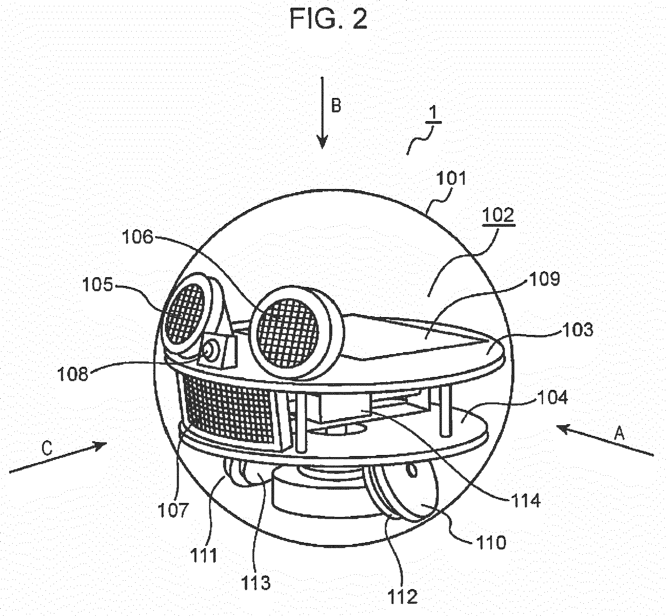

Fig. 2 is an internal perspective view of the robot according to the first embodiment of the present disclosure.

In Fig. 2, a frame 102 is disposed on the inner side portion of the casing 101. The frame 102 has a first rotating plate 103 and a second rotating plate 104. The first rotating plate 103 is positioned above the second rotating plate 104.

A first display unit 105 and a second display unit 106 are provided on the upper face of the first rotating plate 103, as illustrated in Fig. 2. A third display unit 107 is provided on the upper face of the second rotating plate 104. The first display unit 105, second display unit 106, and third display unit 107 are configured of multiple light-emitting diodes, for example. The first display unit 105, second display unit 106, and third display unit 107 display the display information of emotions of the robot. Specifically, the first display unit 105, second display unit 106, and third display unit 107 display a part of the face of the robot 1 such as eyes and a mouth, for example, as illustrated in Fig. 1, by individually controlling on/off of the multiple light-emitting diodes. In the example in Fig. 1, the first display unit 105 displays an image for the left eye, the second display unit 106 displays an image for the right eye, and the third display unit 107 displays an image for the mouth. The images of the left eye, right eye, and mouth pass through the casing 101 made of the transparent or translucent material, and are externally emitted.

A camera 108 is provided on the upper face of the first rotating plate 103, as illustrated in Fig. 2. The camera 108 acquires video of the surrounding environment of the robot 1. The camera 108 makes up part of the face of the robot 1, the nose for example, as illustrated in Fig. 1. Accordingly, the optical axis of the camera 108 faces forward of the robot 1. Thus, the camera 108 can image objects to be recognized that are presented in front.

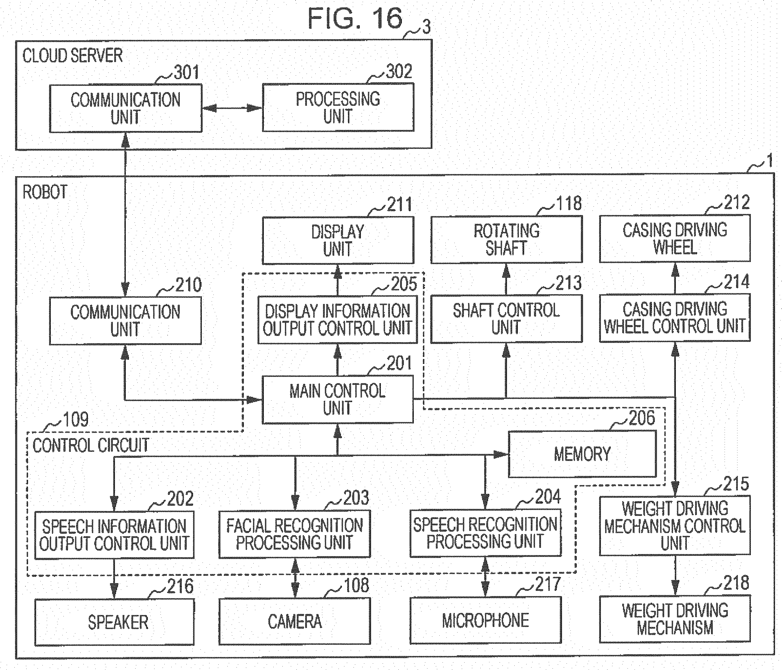

A control circuit 109 is provided to the upper face of the first rotating plate 103, as illustrated in Fig. 2. The control circuit 109 controls various types of actions of the robot 1. Details of the control circuit 109 will be described later with reference to Fig. 16.

A first driving wheel 110 and a second driving wheel 111 are each provided on the lower face of the second rotating plate 104, and come into contact with the inner circumferential face of the casing 101. The first driving wheel 110 has a first motor 112 that drives the first driving wheel 110. In the same way, the second driving wheel 111 has a second motor 113 that drives the second driving wheel 111. That is to say, the first driving wheel 110 and second driving wheel 111 are driven by individual motors that are each independent. The actions of the robot 1 by driving the first driving wheel 110 and second driving wheel 111 will be described in detail later. The first driving wheel 110 and second driving wheel 111 make up a set of driving wheels.

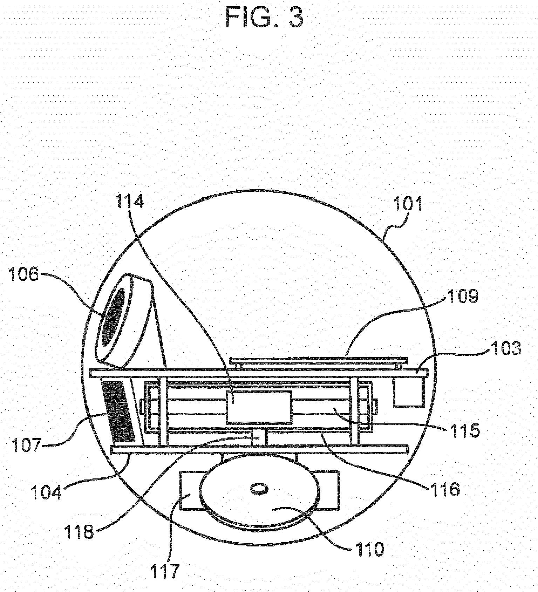

Fig. 3 is an internal side view of the robot 1 according to the first embodiment of the present disclosure, as viewed from A in Fig. 2. A counterweight 114 (an example of a weight) is disposed between the first rotating plate 103 and second rotating plate 104 in Fig. 3. The counterweight 114 is positioned somewhat below the center of the casing 101. Accordingly, the center of gravity of the robot 1 is below the center of the casing 101. Thus, the actions of the robot 1 can be stabilized.

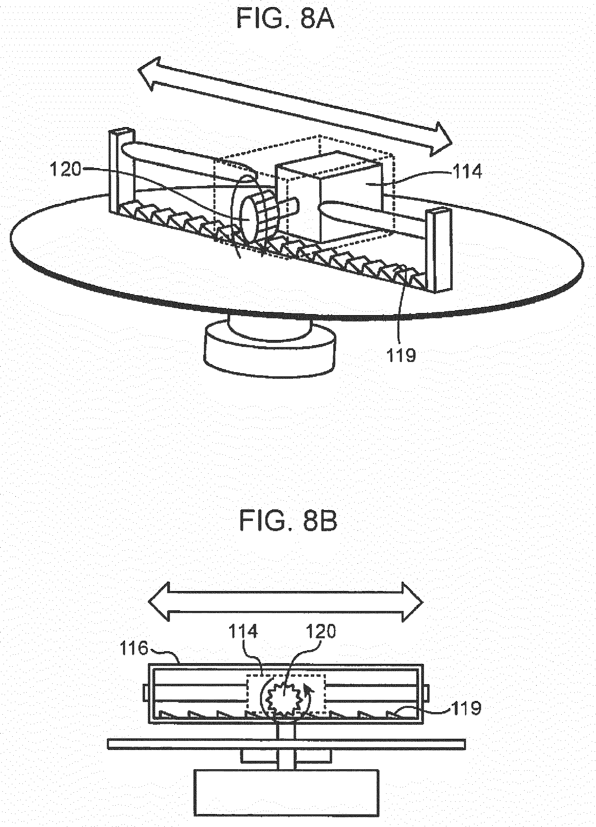

As illustrated in Fig. 3, the robot 1 has, as a mechanism for driving the counterweight 114, a guide shaft 115 that regulates the direction in which the counterweight 114 moves, a swing arm 116 that regulates the position of the counterweight 114 in the rotational direction, a rotating motor 117 that rotates the swing arm 116, a rotating shaft 118 that connects between the swing arm 116 and rotating motor 117, a belt 119 (Fig. 8A and Fig. 8B) used to drive the counterweight 114, a motor pulley 120 (Fig. 8A and Fig. 8B) in contact with the belt 119, and a weight driving motor, omitted from illustration, that rotates the motor pulley 120. Note that in the present embodiment, the driving motor is built into the counterweight 114. Details of actions of the robot 1 by driving of the counterweight 114 will be described later.

The rotating shaft 118 extends in a perpendicular direction as to the driving axes of the first driving wheel 110 and the second driving wheel 111. The rotating shaft 118 corresponds to an example of a shaft provided to the frame 102. In frontal view, the first driving wheel 110 and second driving wheel 111 are attached so that there is a distance toward the ground. In this case, the driving axes of the first driving wheel 110 and second driving wheel 111 are imaginary axial lines connecting the centers of the first driving wheel 110 and second driving wheel 111 with each other, for example. If the first driving wheel 110 and second driving wheel 111 are attached in parallel in frontal view, the actual driving axes are the driving axes of the first driving wheel 110 and second driving wheel 111.

The robot 1 further has a power source that is omitted from illustration, and a microphone 217 (Fig. 16). The robot 1 is charged by a charger that is omitted from illustration. The microphone 217 acquires sound in the surrounding environment of the robot 1.

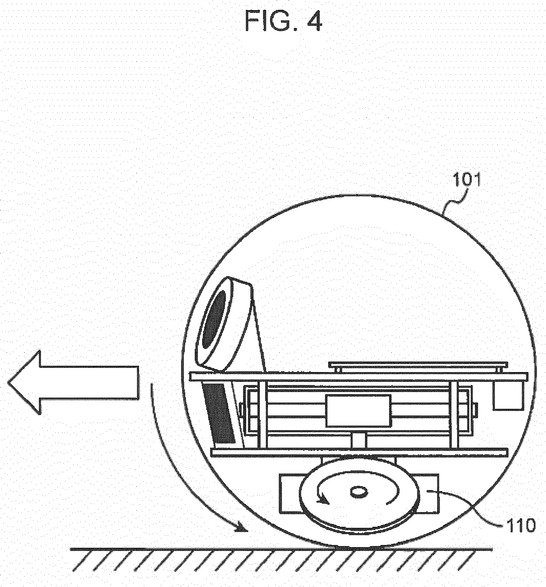

Next, actions of the robot 1 using the first driving wheel 110 and second driving wheel 111 will be described with reference to Fig. 4 through Fig. 6.

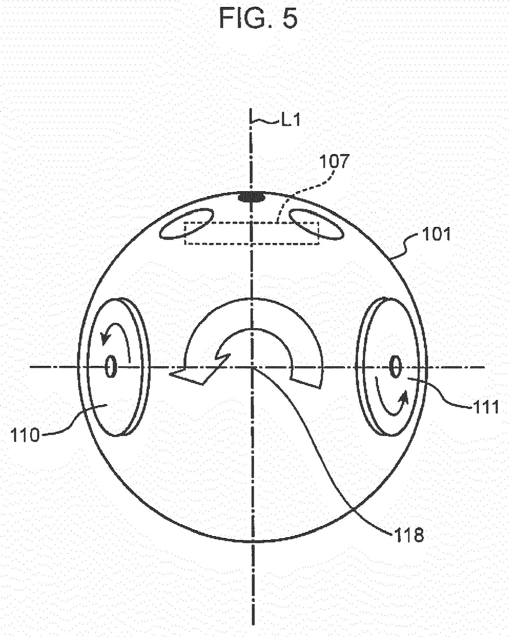

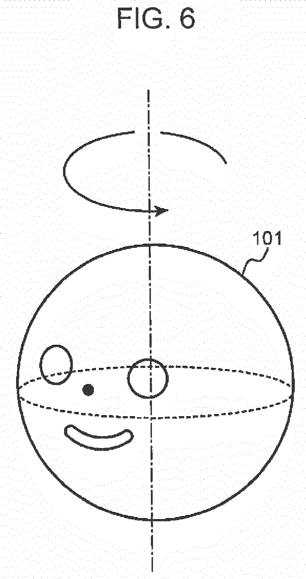

Fig. 4 is a side view representing a straight advancing action of the robot according to the first embodiment of the present disclosure, as viewed from A in Fig. 2. Fig. 5 is a plan view representing a rotating action of the robot according to the first embodiment of the present disclosure, as viewed from B in Fig. 2. Fig. 6 is a perspective view illustrating a rotating action of the robot according to the first embodiment of the present disclosure.

Rotating the first driving wheel 110 and second driving wheel 111 in the forward direction rotates the casing 101 in the forward direction by the power thereof, as illustrated in Fig. 4. Thus, the robot 1 advances forward. Conversely, rotating the first driving wheel 110 and second driving wheel 111 in the reverse direction causes the robot 1 to move backwards.

Rotating the first driving wheel 110 and second driving wheel 111 in opposite directions from each other causes the casing 101 to perform rotating actions on a vertical axis passing through the center thereof by the power thereof, as illustrated in Fig. 5 and Fig. 6. That is to say, the robot 1 rotates to the left or to the right in that spot. The robot 1 moves by performing such advancing, reversing and rotating actions.

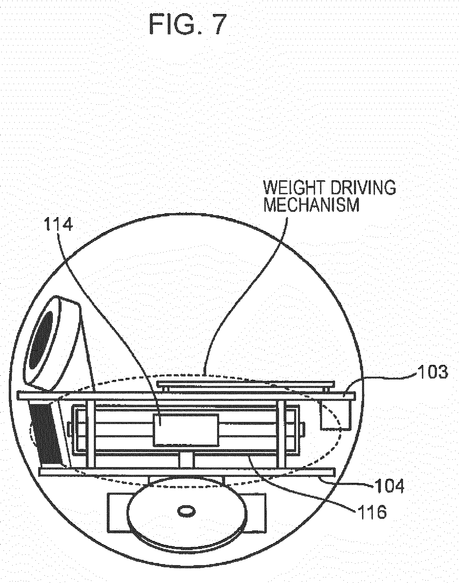

Next, basic actions of the robot 1 using the counterweight 114 will be described with reference to Fig. 7 through Fig. 9C.

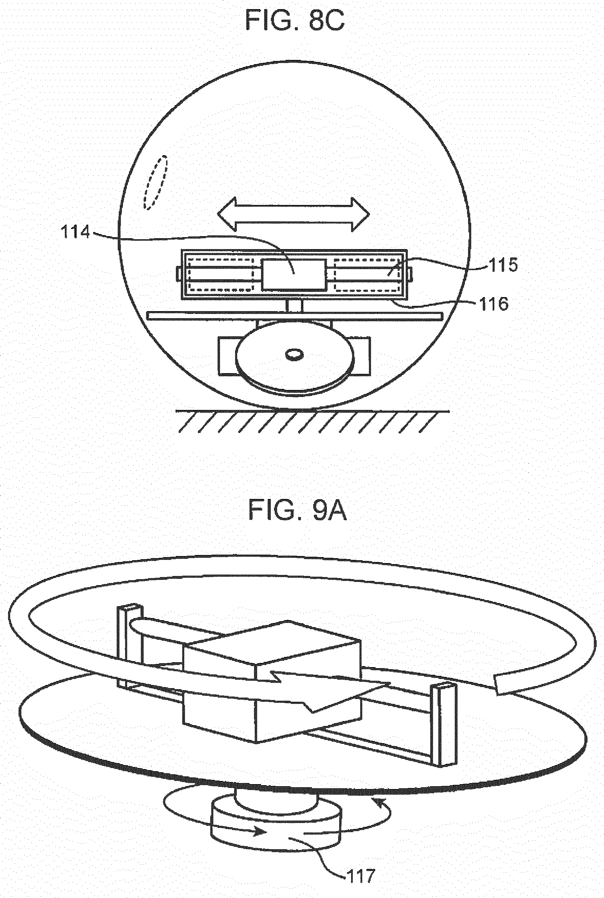

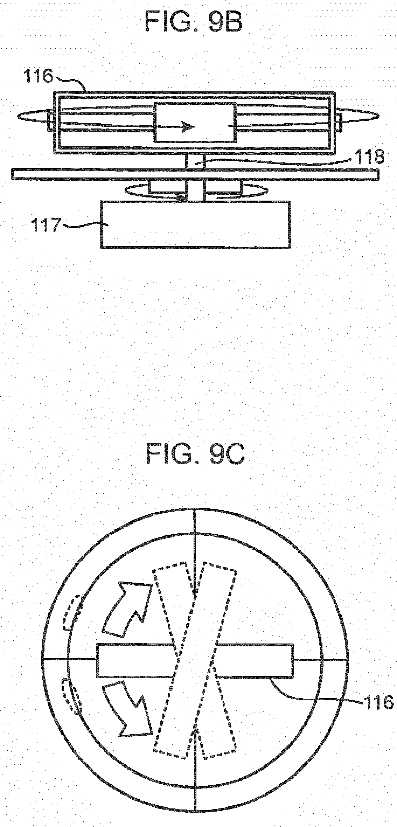

Fig. 7 is a diagram illustrating a weight driving mechanism in the side view in Fig. 3. Fig. 8A is a perspective view illustrating the actions of the driving mechanism of the counterweight 114 when driving the counterweight 114 in a predetermined linear direction. Fig. 8B is a side view illustrating the actions of the driving mechanism of the counterweight 114 when driving the counterweight 114 in a predetermined linear direction. Fig. 8C is a side view illustrating a state of the counterweight 114 being reciprocally moved in a predetermined linear direction in the side view in Fig. 3. Fig. 9A is a perspective view illustrating actions of the driving mechanism of the counterweight 114 when rotating a swing arm 116. Fig. 9B is a side view illustrating actions of the weight driving mechanism when rotating the swing arm 116. Fig. 9C is a plan view illustrating a rotating state of the swing arm 116 of the robot 1 according to the first embodiment of the present disclosure, as viewed from B in Fig. 2.

The middle position of the swing arm 116 is the default position of the counterweight 114, for example, as illustrated in Fig. 7. When the counterweight 114 is positioned at the middle of the swing arm 116, the first rotating plate 103 and second rotating plate 104 are generally parallel with the running surface, and the eyes, nose, and mouth, for example, making up the face of the robot 1, are in a state facing in a default direction.

A weight driving motor, omitted from illustration, built into the counterweight 114, rotates the motor pulley 120 linked to the weight driving motor, as illustrated in Fig. 8A and Fig. 8B. The counterweight 114 moves within the swing arm 116 by the rotated motor pulley 120 turning upon the belt 119. Changing the rotation direction of the motor pulley 120, i.e., the driving direction of the weight driving motor, reciprocally moves the counterweight 114 in a linear direction within the swing arm 116.

As illustrated in Fig. 8C, the counterweight 114 reciprocally moves in the linear direction within the swing arm 116, following the guide shaft 115.

The rotating motor 117 rotates the rotating shaft 118, thereby rotating the swing arm 116 connected to the rotating shaft 118 (Fig. 3), as illustrated in Fig. 9A and Fig. 9B.

The swing arm 116 can be rotated in either direction of clockwise and counterclockwise, as illustrated in Fig. 9C.

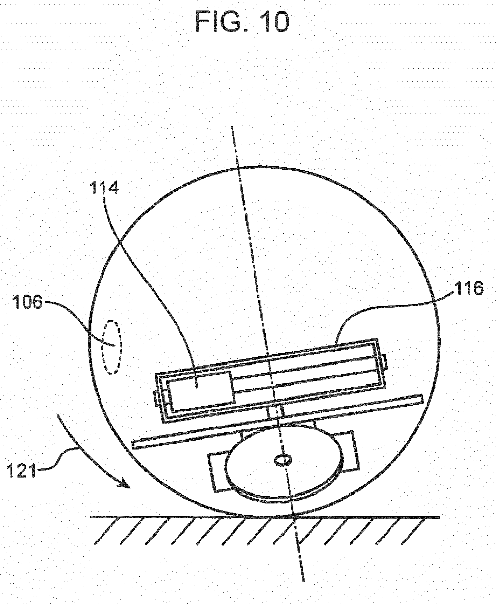

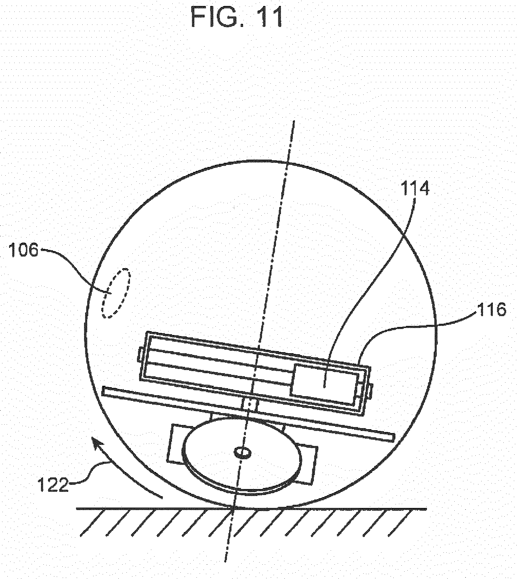

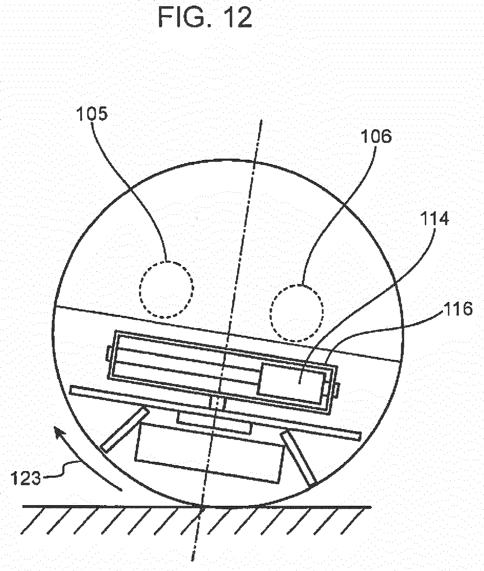

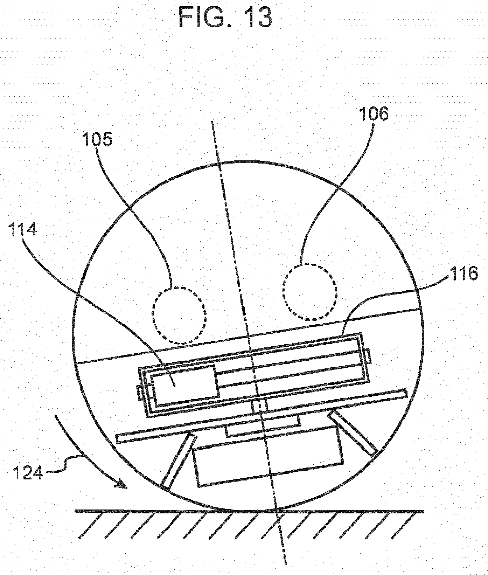

Details of actions of the robot 1 using the counterweight 114 will be further described with reference to Fig. 10 through Fig. 13. Fig. 10 is a side view illustrating the attitude of the robot 1 when the counterweight 114 is situated toward the front as viewed from A in Fig. 2. Fig. 11 is a side view illustrating the attitude of the robot 1 when the counterweight 114 is situated toward the rear as viewed from A in Fig. 2. Fig. 12 is a frontal view illustrating the attitude of the robot 1 when the counterweight 114 is situated toward the right as viewed from C in Fig. 2. Fig. 13 is a frontal view illustrating the attitude of the robot 1 when the counterweight 114 is situated toward the left as viewed from C in Fig. 2.

As illustrated in Fig. 10, when the counterweight 114 is moved from the default position to one end of the swing arm 116 (left end in Fig. 10), i.e., toward the front, in a state where the swing arm 116 is perpendicular to the front of the robot 1, the robot 1 tilts forward, as indicated by arrow 121. Also, as illustrated in Fig. 11, when the counterweight 114 is moved from the default position to the other end of the swing arm 116 (right end in Fig. 11), i.e., toward the rear, in a state where the swing arm 116 is perpendicular to the front of the robot 1, the robot 1 tilts backward, as indicated by arrow 122. Accordingly, reciprocally moving the counterweight 114 from one end to the other end of the swing arm 116 in a state where the swing arm 116 is perpendicular to the front of the robot 1, the robot 1 performs reciprocal actions of tilting forwards as indicated by arrow 121 and backwards as indicated by arrow 122. That is to say, the robot 1 rotates in the up and down direction within a predetermined angle.

As described above, the first display unit 105, second display unit 106, and third display unit 107 represent part of the face of the robot 1, such as the eyes and mouth, for example. Accordingly, reciprocally moving the robot 1 so as to tilt on the forward and backward directions using the counterweight 114 can express a state where the robot 1 is winded or a sleepy state, for example. By performing this control in a case where the remaining charge of the power source has reached a predetermined value or lower, the robot 1 can notify the user that the remaining charge of the power source is low in a natural manner, without displaying information relating to remaining charge that is unrelated to the face, using the first display unit 105, second display unit 106, and third display unit 107.

As illustrated in Fig. 12, when the counterweight 114 is moved from the default position to one end of the swing arm 116 (right end in Fig. 12), i.e., toward the right, in a state where the swing arm 116 is parallel to the front of the robot 1, the robot 1 tilts to the right, as indicated by arrow 123. Also, as illustrated in Fig. 13, when the counterweight 114 is moved from the default position to the other end of the swing arm 116 (left end in Fig. 13), i.e., toward the left, in a state where the swing arm 116 is parallel to the front of the robot 1, the robot 1 tilts to the left, as indicated by arrow 124. Accordingly, reciprocally moving the counterweight 114 from one end to the other end of the swing arm 116 in a state where the swing arm 116 is parallel to the front of the robot 1, the robot 1 performs reciprocal actions of tilting to the right as indicated by arrow 123 and to the left as indicated by arrow 124. That is to say, the robot 1 rotates in the left and right direction within a predetermined angle.

As described above, the first display unit 105, second display unit 106, and third display unit 107 represent part of the face of the robot 1 such as eyes and mouth, for example. Accordingly, causing the robot 1 to perform reciprocal movement tilting to the left and right using the counterweight 114 can express a state where the robot 1 is in a good mood, or that the robot 1 is in thought, for example.

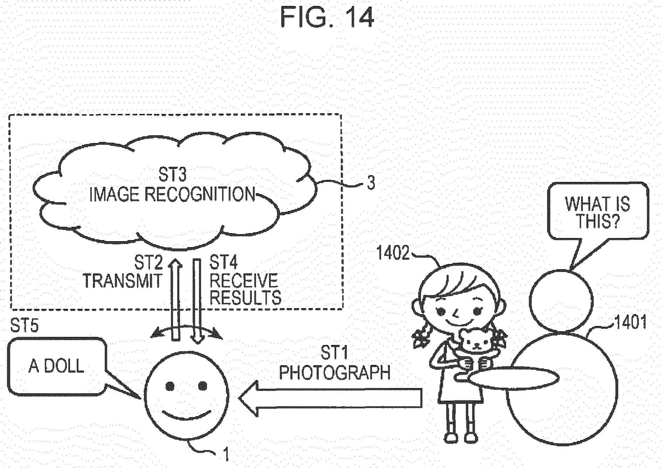

Fig. 14 is a diagram illustrating an example of a usage case of the robot 1 according to the first embodiment of the present disclosure. As illustrated in Fig. 14, the robot 1 is connected to a cloud server 3. A user 1401 holds out a girl doll 1402 in front of the robot 1, and says, "What is this?" The robot 1 then judges that the user 1401 has made a recognition request for an object to be recognized, based on the content of the speech of the user 1401, and takes an image of the object to be recognized (step ST1).

Next, the robot 1 transmits the imaged image of the object to be recognized to the cloud server 3 (step ST2). Next, the cloud server 3 performs image recognition processing, and recognizes that the object to be recognized included in the image that has been transmitted is the doll 1402 (step ST3). Next, the cloud server 3 transmits the image recognition results to the robot 1, and the robot 1 receives the image recognition results (step ST4). Next, the image recognition results are "a doll", so the robot 1 utters "a doll" (step ST5).

Such image recognition processing takes around 15 seconds to 30 seconds from the image being transmitted till the recognition results being received, so if the robot 1 performs no actions during that time, the user 1401 will become uneasy whether the robot 1 has actually accepted the image recognition processing request, or whether the robot 1 is malfunctioning. Accordingly, the following arrangement is employed in the present disclosure.

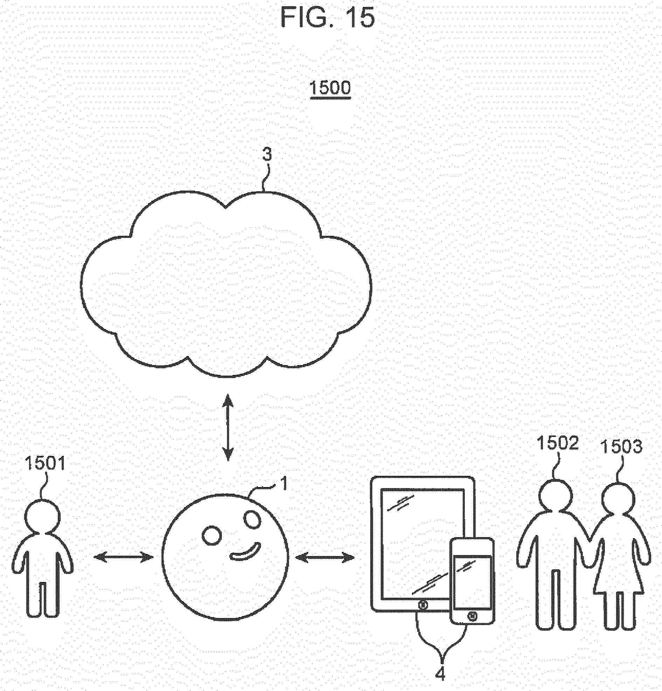

Fig. 15 is a diagram illustrating an example of the overall configuration of a robot system 1500 in which the robot 1 according to the first embodiment of the present disclosure is applied. The robot system 1500 includes the cloud server 3, a mobile terminal 4, and the robot 1. The robot 1 is connected to the Internet via Wifi (a registered trademark) communication for example, and connects to the cloud server 3. The robot 1 also connects to the mobile terminal 4 via Wifi (a registered trademark) communication, for example. A user 1501 is a child for example, and users 1502 and 1503 are the parents of the child, for example.

An application that collaborates with the robot 1 is installed in the mobile terminal 4, for example. The mobile terminal 4 can give various instructions to the robot 1 via the application, and can display the image recognition results described in Fig. 14.

For example, if there is a request from the mobile terminal 4 to read a certain picture storybook to a child, the robot 1 starts reading the picture storybook, and reads to the child. Upon accepting some question from the child while reading the picture storybook, for example, the robot 1 sends the question to the cloud server 3, receives a reply to the request from the cloud server 3, and utters speech indicating the reply.

Thus, the user 1501 can handle the robot 1 like a pet, and can learn language through interaction with the robot 1.

Next, the internal circuits of the robot 1 according to the first embodiment of the present disclosure will be described in detail with reference to Fig. 16. Fig. 16 is a block diagram illustrating the robot 1 according to the first embodiment of the present disclosure, and the cloud server 3 connected to the robot 1. The cloud server 3 corresponds to an example of an external server.

The robot 1 includes the control circuit 109, a communication unit 210, a display unit 211, the rotating shaft 118, casing driving wheels 212, a shaft control unit 213, a casing driving wheel control unit 214, a weight driving mechanism control unit 215, a speaker 216, the camera 108, the microphone 217, and a weight driving mechanism 218, as illustrated in Fig. 16.

The control circuit 109 includes a main control unit 201, a speech information output control unit 202, a facial recognition processing unit 203, a speech recognition processing unit 204, a display information output control unit 205, and memory 206. The control circuit 109 is made up of a computer including a processor such as a CPU or the like.

The main control unit 201 acquires recognition results of the speech of the user from the speech recognition processing unit 204. The main control unit 201 acquires recognition results of the face of the user from the facial recognition processing unit 203.

The main control unit 201 generates commands based on information acquired from the speech recognition processing unit 204 and facial recognition processing unit 203, and transmits these to the speech information output control unit 202, display information output control unit 205, shaft control unit 213, casing driving wheel control unit 214, weight driving mechanism control unit 215, and so forth. Details of the commands will be described later.

The speech information output control unit 202 outputs speech corresponding to commands transmitted from the main control unit 201 from the speaker 216, thereby causing the robot 1 to speak.

The speaker 216 is provided to the frame 102 so that the output plane faces the front, and converts electric signals of the speech into physical vibrations. The speaker 216 corresponds to an example of an output device.

The speech recognition processing unit 204 manages speech recognition results by recognizing whether or not there is the voice of the user in the sound acquired by the microphone 217, and storing speech recognition results in the memory 206. The speech recognition processing unit 204 matches speech recognition data stored in the memory 206 and acquired speech, and recognizes the content that has been spoken.

The microphone 217 is attached to the frame 102, and converts sound into electric signals that are output to the speech recognition processing unit 204. The microphone 217 may be attached to the upper face of the first rotating plate 103, or may be attached to the upper face of the second rotating plate 104, for example. The microphone 217 corresponds to an example of an input device.

The facial recognition processing unit 203 recognizes, from video acquired at the camera 108, whether or not there is the face of the user, position, and size, and accumulates the facial recognition results in the memory 206, thereby managing facial recognition results.

The display information output control unit 205 displays, on the display unit 211, expression information of expressions of the robot 1, in accordance with commands transmitted from the main control unit 201. The display unit 211 is made up of the first display unit 105, second display unit 106, and third display unit 107 illustrated in Fig. 2.

The memory 206 is configured as a non-volatile rewritable storage device for example, and stores control programs of the robot 1 and so forth.

The casing driving wheel control unit 214 operates the casing driving wheels 212 of the robot 1 in accordance with commands transmitted from the main control unit 201. The casing driving wheel control unit 214 is made up of the first motor 112 and second motor 113 described in Fig. 2. The casing driving wheels 212 are made up of the first driving wheel 110 and second driving wheel 111 described in Fig. 2. The casing driving wheels 212 correspond to an example of a set of driving wheels.

The weight driving mechanism control unit 215 operates the weight driving mechanism 218 of the robot 1 in accordance with commands transmitted from the main control unit 201. The weight driving mechanism control unit 215 is made up of a weight driving motor omitted from illustration, built into the counterweight 114. The weight driving mechanism 218 is made up of the guide shaft 115, swing arm 116, rotating motor 117, belt 119, and motor pulley 120 described in Fig. 3, Fig. 8A, and Fig. 8B, and the weight driving motor omitted from illustration.

The shaft control unit 213 rotates the rotating shaft 118 described in Fig. 9A and Fig. 9B in accordance with commands transmitted from the main control unit 201. The shaft control unit 213 is made up of the rotating motor 117 described in Fig. 9A and Fig. 9B. The rotating shaft 118 and shaft control unit 213 correspond to an example of a rotating mechanism.

The communication unit 210 is configured as a communication device to connect the robot 1 to the cloud server 3. A wireless LAN communication device such as Wifi (a registered trademark) or the like, for example, can be employed as the communication unit 210, although this is exemplary.

The cloud server 3 is connected to the robot 1 via the Internet (an example of an external network). The cloud server 3 has a communication unit 301 and a processing unit 302. The communication unit 301 is configured as a communication device for connecting the cloud server 3 to the Internet. The processing unit 302 executes various types of processing following requests from the robot 1, and transmits the processing results to the robot 1 via the communication unit 301.

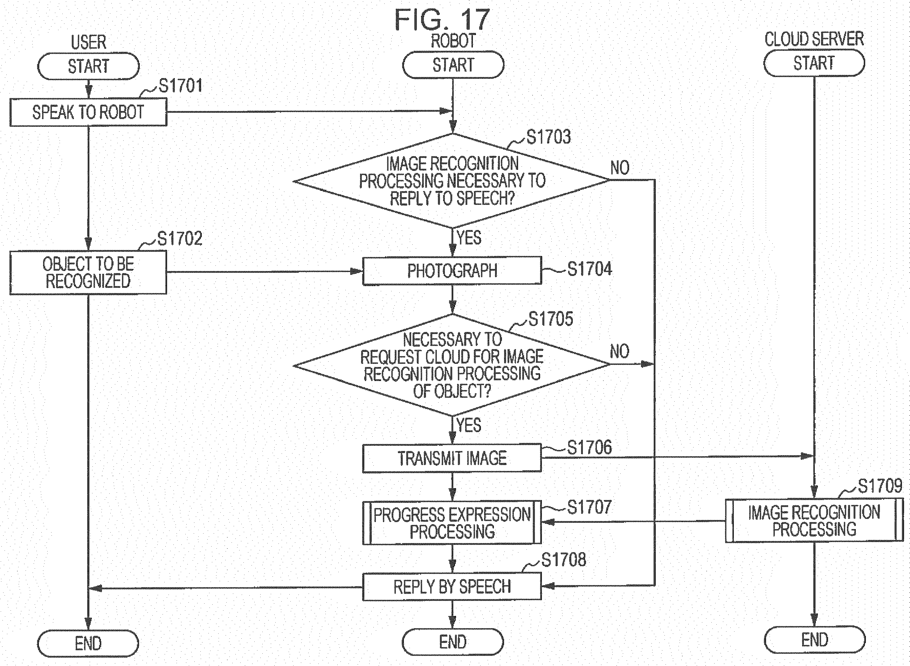

Next, image recognition processing at the robot 1 according to the first embodiment of the present disclosure will be described with reference to Fig. 17. Fig. 17 is a flowchart illustrating image recognition processing at the robot 1 according to the first embodiment of the present disclosure. Processing is performed here where the robot 1 rocks to the left and right directions, expressing that the robot 1 is in thought, during the period from the robot 1 commissioning the cloud server 3 to perform image recognition processing until the image recognition results are received.

First, the user speaks to the robot 1 (S1701). For example, the user holds the doll 1402 out in front of the robot 1, and says "What is this?" as described in Fig. 14.

Next, the speech recognition processing unit 204 of the robot 1 determines whether or not there is a need for image recognition processing to reply to this utterance (S1703). Now, the memory 206 stores one or more speech reference data indicating features of speech regarding which image recognition processing is necessary for a reply. Accordingly, the speech recognition processing unit 204 may judge that image recognition processing is necessary, if the degree of similarity between features of the speech that the user has uttered and any one of speech reference data stored in the memory 206 is a threshold value or higher.

For example, speech regarding which image recognition processing is necessary may be speech inquiring about an object to be recognized, such as the "What is this?" described above, or command format speech such as "Execute image recognition processing" may be employed. Further, in order to handle queries regarding numbers, such as a user holding up two fingers, the index finger and the middle finger, and asking "How many is this?", "How many is this?" may be employed as speech necessitating image recognition processing for a reply.

In a case where determination is made in S1703 that image recognition processing is necessary for a reply (YES in S1703), the flow advances to S1704, while in a case where determination is made that image recognition processing is not necessary for a reply (NO in S1703), the flow advances to S1708.

Next, the camera 108 takes one image including the object to be recognized (S1702, S1704). The speech recognition processing unit 204 notifies the main control unit 201 at this time that image recognition processing is necessary, and the main control unit 201 that has received this notification transmits a photography command to the facial recognition processing unit 203, thereby causing the camera 108 to photograph the object to be recognized.

In a case where judgement is made by the speech recognition processing unit 204 that image recognition processing is necessary, the main control unit 201 may notify the speech information output control unit 202 of a message such as "Face the object that you want to know toward the front of the robot." and cause the message to be output from the speaker 216. Accordingly, the robot 1 can cause the user to hold out the object to be recognized to the front of the robot 1, thereby avoiding a situation where the object to be recognized is not included in the shooting range of the camera 108.

Next, the main control unit 201 determines whether or not the image that has been taken in S1704 needs a request for image recognition processing to the cloud server 3 (S1705). In a case where the main control unit 201 determines that there is need to request image recognition processing (YES in S1705), the communication unit 210 transmits the image that has been taken in S1704 to the cloud server 3 (S1706). On the other hand, in a case where the main control unit 201 determines that there is no need to request image recognition processing (NO in S1705), the processing advances to S1708.

Now, recognition-unnecessary reference data, that is features of a reference image regarding which a request for image recognition processing is unnecessary, is stored in the memory 206 beforehand. Accordingly, if the degree of similarity between the features of the image taken in S1704 and the recognition-unnecessary reference data is a threshold value or higher, the main control unit 201 may determine that no request for image recognition processing is necessary, and determine that a request image recognition processing is necessary if the degree of similarity between the features of the image taken in S1704 and the recognition-unnecessary reference data is below the threshold value.

A reference image includes a facial image of the user, for example. The facial image of the user may include a facial image of a child who mainly handles the robot 1, and facial images of family members of the child, for example. This takes into consideration the point that requesting the cloud server 3 every single time to perform image recognition processing regarding the frequently-performed processing of recognizing the face of the user will increase the standby time of the user, increasing user stress. An image where the user is holding up one or more fingers, such as one finger, two fingers, or the like, may also be employed as a reference image.

Next, the robot 1 performs progress expression processing until image recognition results are obtained (S1707). Details of the progress expression processing will be described later.

In a case where a request for image recognition processing to the cloud server 3 is necessary, a predetermined amount of time or longer is taken until the image recognition results are obtained. In this case, there is a risk of the user judging that the robot 1 is malfunctioning, if the robot 1 performs no actions. Accordingly, in the present embodiment, in a case where image recognition processing needs to be requested to the cloud server 3, the later-described progress expression processing (S1707) is performed.

Next, the cloud server 3 performs image recognition processing (S1709). Details of image recognition processing will be described later.

When image recognition results are obtained, the robot 1 ends the progress expression processing.

Next, the speech information output control unit 202 outputs the image recognition results from the speaker 216, thereby giving a reply of the image recognition results by speech (S1708). In this case, the speech information output control unit 202 outputs speech indicating the name of the object to be recognized, for example, from the speaker 216. For example, in a case where the doll 1402 is recognized as illustrated in Fig. 14, speech "a doll" is output from the speaker 216.

In a case where determination of NO in S1703 and NO in S1705 is made, the processing of S1708 is as follows. An example of a case where determination is made that there is no need for image recognition processing for a reply to the speech (NO in S1703) is a case where the user has a conversation with the robot 1. In this case, it is sufficient for the speech information output control unit 202 to output speech from the speaker 216, responding to the conversation with the user, in S1708.

Examples of a case where there is no need to request the cloud server 3 for image recognition processing for the image taken in S1704 (NO in S1705) are a case where the user asks his/her own name to the robot 1, or the user holds up fingers and asks, "How many?". In this case, it is sufficient for the speech output control unit 202 to output the name of the user, or speech such as "That's two." from the speaker 216 in S1708.

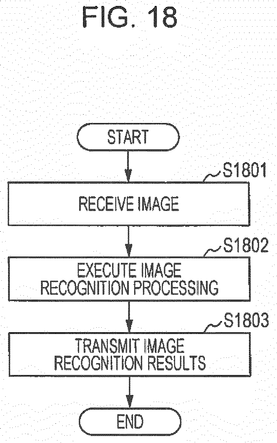

Fig. 18 is a flowchart illustrating details of the image recognition processing shown in S1709 in Fig. 17, in the first embodiment of the present disclosure. First, the communication unit 301 receives the image transmitted from the robot 1 (S1801).

Next, the processing unit 302 performs image recognition processing (S1802). In the usage case illustrated in Fig. 14, for example, the image including the doll 1402 is the object of the image recognition processing. The processing unit 302 has an object model database, obtained by computer learning, for example, where features of images of objects and names of objects have been registered in a correlated manner. The processing unit 302 extracts features from images transmitted from the robot 1, matches the extracted features with features of the objects registered in the object model database, and determines the object of which the degree of similarity is highest to be the object to be recognized. In the example in Fig. 14, "a doll" is the image recognition results.

Next, the communication unit 301 transmits the image recognition results from the processing unit 302 to the robot 1 (S1803).

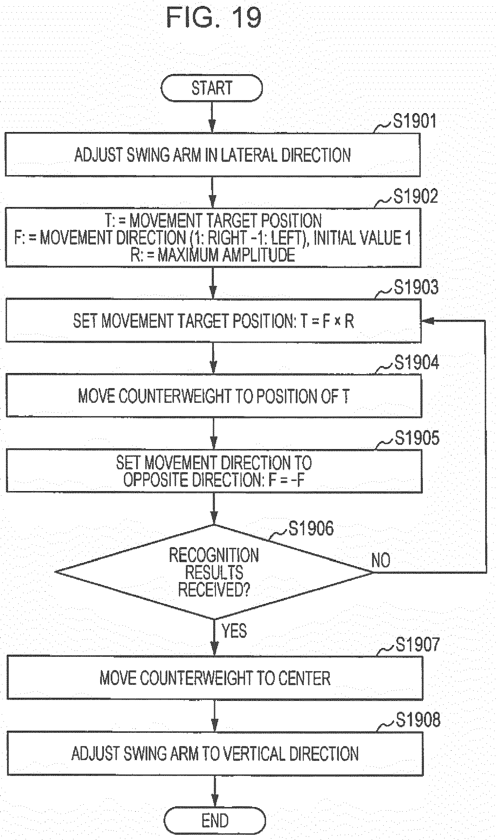

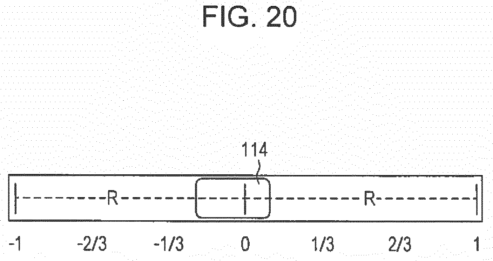

Fig. 19 is a flowchart illustrating details of progress expression processing shown in S1707 of Fig. 17 in the first embodiment of the present disclosure. Fig. 20 is a schematic diagram of the position of the counterweight 114.

First, the shaft control unit 213 receives from the main control unit 201 a command to turn the swing arm 116 to a lateral direction as to the front of the robot 1, as illustrated in Fig. 12, and adjusts the attitude of the swing arm 116 in the lateral direction (S1901). For example, a state where the swing arm 116 is perpendicular to the front of the robot 1 is the default rotational angle of the swing arm 116. In this case, it is sufficient for the main control unit 201 to output a command to the shaft control unit 213, to rotate the swing arm 116 by 90 degrees clockwise or counterclockwise.

Accordingly, a certain direction in which the weight driving mechanism 218 causes the counterweight 114 to move reciprocally is orthogonal as to a vertical plane including an imaginary line L1 (see Fig. 3, Fig. 5) connecting the display unit 211 and the rotating shaft 118. The imaginary line L1 is a line connecting the rotating shaft 118 or an extensional line extending in the longitudinal direction of the rotating shaft 118 and the center of the display unit 107, with reference to Fig. 3. The vertical plane including the imaginary line L1 is a plane that includes the imaginary line L1 and is direct to the ground.

Next, the main control unit 201 prepares three parameters, which are a movement target position T of the counterweight 114, a movement direction F of the counterweight 114, and a maximum amplitude R that stipulates half the length of a movement range 2R of the counterweight 114 (S1902).

Referencing Fig. 20, regarding the movement target position T, the center of the movement range 2R of the counterweight 114 is set to 0, the right end is set to "R", and the left end is set to "-R". The movement target position T is a parameter indicating the position of the counterweight 114 on the swing arm 116 which extends in a straight line. The movement direction F is a parameter that stipulates whether to move the counterweight 114 in the right direction as to the center of the movement range 2R, or to move in the left direction. The movement direction F assumes the value "1" when the counterweight 114 is moved in the right direction as to the center of the movement range 2R, and the value "-1" when the counterweight 114 is moved in the left direction.

Next, the main control unit 201 sets the movement target position T by computation of T = F × R (S1903). For example, in a case of moving the counterweight 114 in the right direction, F = 1, so the movement target position T is T = R. In this case, the movement target position T is set to the eight end of the movement range 2R. On the other hand, in a case of moving the counterweight 114 in the left direction, F = -1, so the movement target position T is T = -R. In this case, the movement target position T is set to the left end of the movement range 2R. First, the movement direction F is set to F = 1 here, but this is exemplary, and may be set to F = -1

Next, the weight driving mechanism control unit 215 accepts a command that specifies the movement target position T from the main control unit 201, and moves the counterweight 114 to the movement target position T. The movement target position T is first set to T = R here, so the counterweight 114 moves toward the right end of the swing arm 116. In accordance with this movement, the robot 1 tilts in to the right side, as indicated by the arrow 123 illustrated in Fig. 12.

Next, when the counterweight 114 reaches the movement target position T, the main control unit 201 sets the movement direction F to the opposite direction (S1905). Now, the main control unit 201 may obtain the number of rotations of the weight driving motor from an encoder that the weight driving mechanism control unit 215 has, and determine that the counterweight 114 has reached the movement target position T when the obtained number of rotations reaches the number of rotations corresponding to the movement target position T.

Next, if the communication unit 210 has not received the image recognition results (NO in S1906), the main control unit 201 returns the flow to S1903, and the processing of S1903 through S1906 is performed. For example, the movement target position T is set to T = -R in the second loop of S1903 through S1906, so the counterweight 114 is moved to the position T = -R. In accordance with this movement, the robot 1 tilts in to the left side, as indicated by the arrow 124 illustrated in Fig. 13. The control circuit 9 thus reciprocally moves the counterweight 114 in a state where the certain direction in which the counterweight 114 is moved is direct to the vertical plane including the imaginary line L1 (see Fig. 3), until the image recognition results are received. Accordingly, the robot 1 repeats the actions of rocking to the left and right until the image recognition results are received, and thus can notify the user that image recognition processing is currently being performed.

On the other hand, upon the communication unit 210 receiving the image recognition results (YES in S1906), the weight driving mechanism control unit 215 accepts a command from the main control unit 201 to set the movement target position T to T = 0, and moves the counterweight 114 to the center of the swing arm 116 (S1907). Accordingly, the robot 1 stops rocking to the left and right and returns to the default attitude.

Next, the shaft control unit 213 accepts a command to make the swing arm 116 to be perpendicular to the front of the robot 1, and makes the swing arm 116 to be perpendicular to the front of the robot 1 (S1908).

Accordingly, the swing arm 116 and the counterweight 114 return to the default state, so the robot 1 can speedily respond to the next action.

Thus, according to the present embodiment, the robot 1 performs actions of rocking to the left and right with the position of the mouth or nose as the front, in a case where a predetermined amount of time or longer is required for responding to a user inquiry. This action represents a body movement of the robot feeling troubled and rocking its body to the left and right.

Accordingly, even in a case of a spherical robot that does not have hands or feet, where there are restrictions in communicating the progress state of internal processing to the user, the user can be notified that the robot is currently performing processing during the conversation with the user using moving actions of the counterweight 114, without displaying that processing is being performed on the surface of the spherical robot. As a result, the user can tell whether the robot 1 is currently performing processing or is not moving due to a malfunction, simply by viewing the external appearance of the robot 1.

In a case where image recognition results are received, the counterweight 114 is returned to the default position (S1907) and the attitude of the swing arm 116 is returned to the original state (S1908) in the present embodiment.

Accordingly, an unnatural situation can be avoided in which the robot 1 is rocked to the left and right during processing of image recognition processing, and responds in a state partway through the robot 1 rocking to the left and right.

### (Second Embodiment)

A feature of a second embodiment is that the distance over which the counterweight 114 reciprocally moves is reduced as the progress state of image recognition processing advances. Note that configurations the same as those in the first embodiment are denoted by the same symbols in the second embodiment, and description will be omitted.

The overall processing in the second embodiment is the same as that in Fig. 17, but S1709 and S1707 differ.

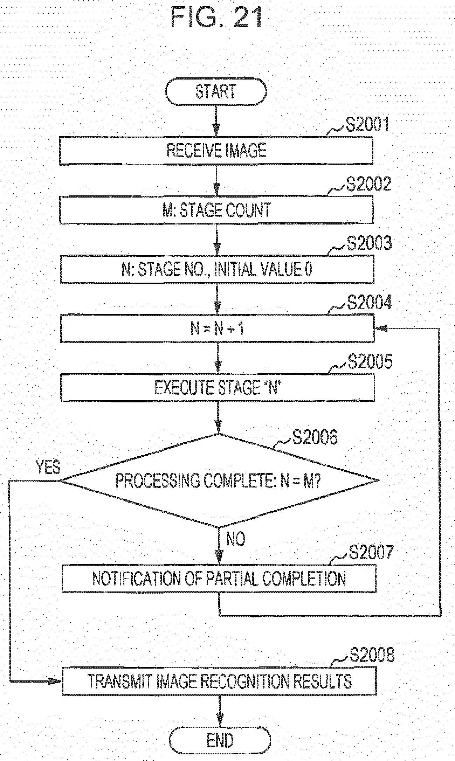

Fig. 21 is a flowchart illustrating details of the image recognition processing in S1709 of Fig. 17, according to the second embodiment of the present disclosure. S2001 and S2008 are the same as S1801 and S1803 in Fig. 18, so description will be omitted.

In S2002, the processing unit 302 prepares a parameter for stipulating a stage count M needed for image recognition processing. The stage count M employs a value set beforehand in accordance with the content of the image recognition processing that the cloud server 3 employs. For example, if image recognition processing made up of stage count of three is employed for the cloud server 3, M = 3 is set.

In S2003, the processing unit 302 sets a stage No. N to the initial value "0". The stage No. N here is a No. for identifying the stage being processed.

In S2004, the processing unit 302 increments the stage No. N by one.

In S2005, the processing unit 302 executes image recognition processing for stage No. N.

In S2006, the processing unit 302 judges whether or not the stage No. N has reached the stage count M. In a case where the stage No. N has reached the stage count M (YES in S2006), the image recognition results have been obtained so the processing unit 302 advances the flow to S2008.

If the stage No. N has not reached the stage count M (NO in S2006), the processing unit 302 uses the communication unit 210 to notify the robot 1 that part of the image recognition results has been completed (S2007). At this time, the processing unit 302 transmits the stage No. N regarding which processing has ended, and the stage count M, to the robot 1.

Upon the processing in S2007 ending, the flow returns to S2004. Accordingly, image recognition processing for the next stage No. N is executed.

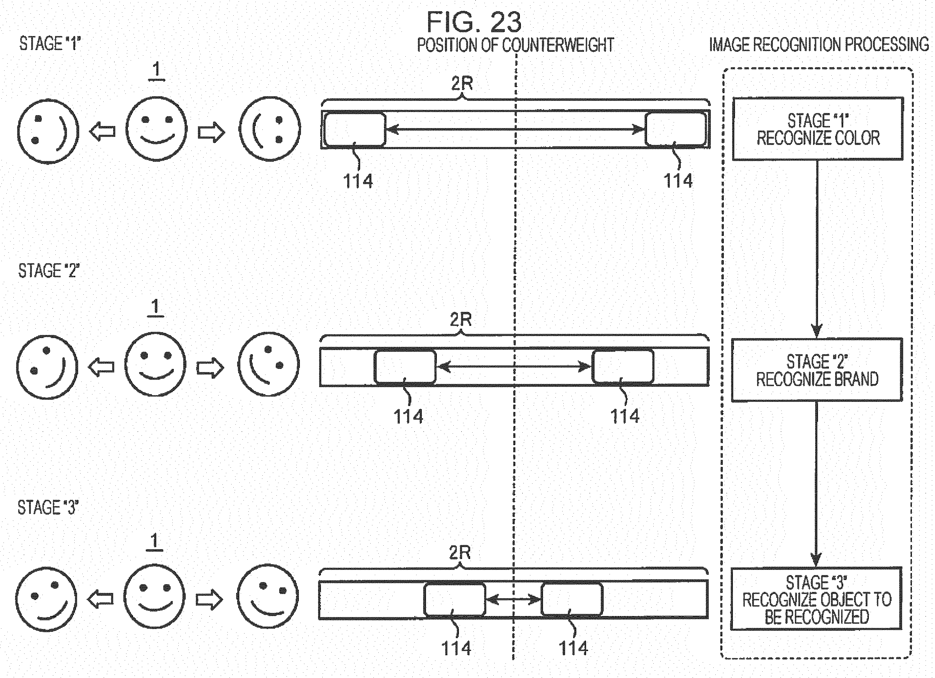

Next, the stages of image recognition processing will be described. Fig. 23 is a diagram illustrating the relationship between the position of the counterweight 114, and the stage indicated by a stage No. "N" in image recognition processing. In the example in Fig. 23, the image recognition processing is made up of three stages "1", "2", and "3", indicated by stage Nos. N = 1, 2, and 3.

Stage "1" is a stage where the color of the object to be recognized is recognized, stage "2" is a stage where the brand of the object to be recognized is recognized, and stage "3" is a stage where what the object to be recognized is, finally is recognized.

For example, if the object to be recognized is a commercially-sold soft drink, the color making up the soft drink is recognized in stage "1". For example, if the soft drink is water, the recognition results will be "transparent". The processing unit 302 may extract the object to be recognized from the image transmitted from the robot 1, for example, and perform processing to analyze the color of the object to be recognized that has been extracted, thereby recognizing the color of the object to be recognized. There are cases where the object to be recognized is made up of multiple colors. In this case, the processing unit 302 may take the colors of several top colors making up a certain percentage or more as the recognition results.

In stage "2", the processing unit 302 recognizes a brand name by recognizing text listed on the label of the soft drink bottle, for example. If a product name "XXX" is listed on the label of the soft drink bottle, the recognition results are "XXX", for example.

In stage "3", the processing unit 302 finally recognizes what the object to be recognized is, for example, using the above-described object model database. For example, if a soft drink is recognized, the recognition results will be "soft drink". Now, if the type of soft drink has been recognized as well, the recognition result will be "soft drink: water".

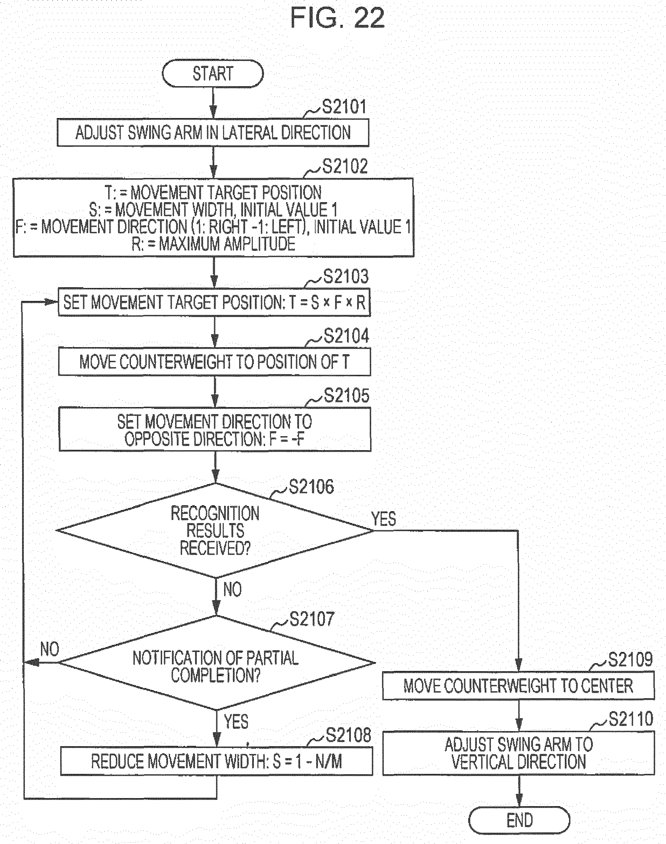

Fig. 22 is a flowchart illustrating details of progress expression processing shown in S1707 of Fig. 17 in the second embodiment of the present disclosure.

S2101, S2104, S2105, S2106, S2109, and S2110, in Fig. 22, are the same as S1901, S1904, S1905, S1906, S1907, and S1908, in Fig. 19, so description will be omitted.

In S2102, the main control unit 201 further sets a movement width S for the counterweight 114, in addition to the movement target position T, movement direction F, and maximum amplitude R. The movement width S is a parameter indicating the percentage of amplitude of the counterweight 114 as to a maximum amplitude R of 1. The movement width S has a value of "0" or greater and "1" or smaller, such as "0", "1", "2/3", "1".

In S2103, the main control unit 201 sets the movement target position T by calculating T = S × F × R.

S2107 is processing of the robot 1 receiving the notification that part of the image recognition processing has been completed, which the cloud server 3 has transmitted in S2007 in Fig. 21. If no notification has been received from the cloud server 3 by the communication unit 210 in S2107 to the effect that part of image recognition processing has been completed (NO in S2107), the main control unit 201 returns the flow to S2103. On the other hand, if the notification to the effect that part of the image recognition processing has been completed has been received by the communication unit 210 from the cloud server 3 (YES in S2107), the main control unit 201 advances the flow to S2108. In S2107, the robot 1 receives the stage No. N, of which processing has ended, and the stage count M.

In S2108, the main control unit 201 uses the stage No. N, of which processing has ended, and the stage count M, received in S2107, to set the movement width S to S = 1 - N/M, and reduces the movement width S. For example, when stage "1" ends, the robot 1 receives N = 1 in S2107, and so a rotation speed V is set to V = V1 × (1 - 1/M) in the processing in stage "2".

Accordingly, the main control unit 201 sets the movement width S one step lower each time the stage of image recognition processing progresses by one stage.

In the example in Fig. 23, the main control unit 201 sets the movement width S to "1" in the processing of stage "1". In this case, the counterweight 114 reciprocally moves to the left and right at the maximum amplitude R, so the robot 1 rocks to the left and right at an amplitude equivalent to the maximum amplitude R.

When the processing of stage "1" ends, the main control unit 201 sets the movement width S to S = 2/3 (=1 - 1/3). Accordingly, the counterweight 114 reciprocally moves to the left and right at the amplitude "R × 2/3" during the processing of stage "2", so the robot 1 also rocks to the left and right at an amplitude equivalent to the amplitude "R × 2/3".

When the processing of stage "2" ends, the main control unit 201 sets the movement width S to S = 1/3 (=1 - 2/3). Accordingly, the counterweight 114 reciprocally moves to the left and right at the amplitude "R × 1/3" during the processing of stage "3", so the robot 1 rocks to the left and right at an amplitude equivalent to the amplitude "R × 1/3".

Thus, according to the present embodiment, the amplitude of the counterweight 114 is reduced as the stages of image recognition processing advance, so the user can be notified of the state of progress of the image recognition processing through the actions of the robot 1.

### (First Modification)

In the first and second embodiments, the robot 1 is made to perform an action of rocking to the left and right in a case of requesting the cloud server 3 to perform image recognition processing. The present disclosure is not restricted to this, and the robot 1 may be made to perform an action of rocking to the left and right in a case of requesting the cloud server 3 to perform processing other than image recognition processing (e.g., audio recognition processing). A predetermined amount of time or longer may be required until obtaining processing results in a case of requesting the cloud server 3 to perform processing other than image recognition processing, as well. In this case, the user can be prevented from judging that the robot 1 is malfunctioning by causing the robot 1 to perform an action of rocking to the left and right until processing results are received.

### (Second Modification)

While the display unit 211 is provided in the first and second embodiments, this is exemplary, and the display unit 211 may be omitted. The display unit 211 displays a part of the face of the robot, so an expression of the robot 1 being in thought can be made better with the display unit 211, but the user can be sufficiently notified that the robot 1 is in thought by causing the robot 1 to perform an action of rocking to the left and right until processing results are received, even without the display unit 211.

### (Third Modification)

While the movement width S is reduced in increments of "N/M" as the stage of image recognition processing advances in the second embodiment, this is exemplary, and an arrangement may be made where the movement width S is reduced such that the amount of reduction in movement width S increases or decreases as the stage advances.

### (Overview of Embodiments of the Present Disclosure)

A robot according to an aspect of the present disclosure includes: a spherical casing; a frame that is disposed on an inner side portion of the casing; an input device that is provided to the frame; an output device that is provided to the frame; a set of driving wheels that are provided to the frame, the driving wheels coming into contact with an inner circumferential face of the casing and rotating the casing; a shaft that is provided to the frame, and extends in a perpendicular direction as to driving axes of the set of driving wheels; a weight driving mechanism that is provided to the frame, and causes a weight to reciprocally move in a certain direction; a rotating mechanism that causes the weight driving mechanism to rotate centered on the shaft; and a control circuit that, in a case of responding via the output device, based on predetermined processing that requires a predetermined amount of time or more as to an input instruction by a user input via the input device, causes the weight driving mechanism to be rotated to where the certain direction in which the weight driving mechanism reciprocally moves the weight is orthogonal to an advancing direction by the set of driving wheels, and causes the weight to be reciprocally driven in the certain direction orthogonal to the advancing direction, during the predetermined processing.

According to this aspect, in a case of responding via the output device, based on predetermined processing that requires a predetermined amount of time or more as to an input instruction by a user input via the input device, the weight driving mechanism is caused to be rotated to where the certain direction in which the weight driving mechanism reciprocally moves the weight is orthogonal to an advancing direction by the set of driving wheels, and the weight is caused to be reciprocally driven in the certain direction orthogonal to the advancing direction, during the predetermined processing.

Accordingly, in a case where the robot needs a predetermined amount of time or more to respond to the query from the user, the robot performs an action of rocking to the left and right, with the advancing direction as the front. This action represents a body movement of the robot feeling troubled and rocking its body to the left and right.

Accordingly, even in a case of a spherical robot that does not have hands or feet, where there are restrictions in communicating the progress state of internal processing to the user, the user can be notified that the robot is currently performing processing during the conversation with the user using moving actions of the weight, without displaying that processing is being performed on the surface of the spherical robot. As a result, the user can tell whether the robot is currently performing processing or is not moving due to a malfunction, simply by viewing the external appearance of the robot.

Also, in the above aspect, for example, the control circuit may stop reciprocal movement of the weight at a default position of the weight when outputting contents of the response via the output device.

According to this aspect, the reciprocal movement of the weight is stopped at a default position of the weight when outputting contents of the response via the output device. Accordingly, even in a case of expressing the robot feeling troubled by rocking the robot to the left and right while performing the predetermined processing, the robot returns to its proper attitude and responds to the query from the user when outputting the contents of the response via the output device. Accordingly, an unnatural situation can be avoided in which the robot is rocked to the left and right during the predetermined processing, and responds in a state partway through the robot rocking to the left and right.

Also, in the above aspect, for example, the predetermined processing may be made up of two or more procedures, the control circuit causing a distance of reciprocal movement of the weight from the default position of the weight to be reduced, each time each of the two or more procedures ends.

According to this aspect, the distance of reciprocal movement of the weight is reduced as the procedures of the predetermined processing advance, so the user can be notified of the state of progress of the predetermined processing through the actions of the robot.

Also, in the above aspect, for example, a display unit may be further provided that is provided to the frame toward the advancing direction, and displays at least part of a face of the robot.

In this case, part of the face of the robot displayed on the display unit makes up a mouth or nose, for example. Thus, the robot performs actions of rocking to the left and right with the position of the mouth or nose as the front, for example, in a case where the robot needs a predetermined amount of time or longer for responding to a user inquiry. This action represents a body movement of the robot feeling troubled and rocking its body to the left and right.

Accordingly, the user can be notified that the robot is currently performing processing during the conversation with the user using moving actions of the weight. As a result, the user can tell whether the robot is currently performing processing or is not moving due to a malfunction, simply by viewing the external appearance of the robot.

Also, in the above aspect, for example, a camera may be provided to the frame with a photographing direction facing the advancing direction.

In this case, the camera makes up part of the face of the robot, such as a mouth or nose, for example. Thus, the robot performs actions of rocking to the left and right with the position of the mouth or nose as the front, in a case where the robot needs a predetermined amount of time or longer for responding to a user inquiry. This action represents a body movement of the robot feeling troubled and rocking its body to the left and right.

Accordingly, the user can be notified that the robot is currently performing processing during the conversation with the user using moving actions of the weight. As a result, the user can tell whether the robot is currently performing processing or is not moving due to a malfunction, simply by viewing the external appearance of the robot.

Also, in the above aspect, for example, a camera, provided to the frame with a photographing direction facing the advancing direction; and a communication circuit that is provided to the frame and connected to an external network, may be further provided, the predetermined processing being image recognition processing performed at an external server connected via the external network.

The processing load of image recognition processing is excessive, and accordingly the processing is often performed at an external server. In this case, a predetermined amount of time or more is taken until the processing result is obtained. In this aspect, the robot performs actions of rocking to the left and right even in a case where the predetermined processing is executed at an external server. Accordingly, the user can be notified that internal processing is being executed.

Also, in the above aspect, for example, when responding based on the image recognition processing, the control circuit uses the camera to cause an object to be recognized to be imaged, uses the communication circuit to cause an image of the object to be recognized, which has been imaged, to be transmitted to the external server via the external network, uses the communication circuit to cause recognition results of the image of the object to be recognized from the external server to be received, and causes the received recognition results to be output via the output device.

According to this aspect, image recognition processing, of which the processing load is excessive, is executed at an external server, so it is sufficient for the robot to image the object to be recognized and receive the recognition results from the external server, so the processing load of the robot can be reduced.

Also, in the above aspect, for example, the input device may be a microphone, and the input instruction by the user input via the input device may be an instruction by speech.

According to this aspect, the robot can be given instructions for predetermined processing simply by the user uttering speech for input instructions, without manually inputting input instructions. Accordingly, the load on the user at the time of inputting input instructions is reduced. This aspect is particularly useful for users regarding which manual input is difficult, such as toddlers.

Also, in the above aspect, for example, the output device may be a speaker.

According to this aspect, the processing results are output through the speaker, so the user can know the processing results without watching the robot.

Also, in the above aspect, for example, included are: a spherical casing; a frame that is disposed on an inner side portion of the casing; a display unit that is provided to the frame, and displays at least part of a face of the robot; an input device that is provided to the frame; an output device that is provided to the frame; a set of driving wheels that are provided to the frame, the driving wheels coming into contact with an inner circumferential face of the casing and rotating the casing; a shaft that is provided to the frame, and extends in a perpendicular direction as to driving axes of the set of driving wheels; a weight driving mechanism that is provided to the frame, and causes a weight to reciprocally move in a certain direction; a rotating mechanism that causes the weight driving mechanism to rotate centered on the shaft; and a control circuit that, in a case of responding via the output device, based on predetermined processing that requires a predetermined amount of time or more as to an input instruction by a user input via the input device, causes the weight driving mechanism to be rotated to where the certain direction in which the weight driving mechanism reciprocally moves the weight is orthogonal to a vertical plane including an imaginary line connecting the display unit and the shaft, and causes the weight to be reciprocally driven in the certain direction orthogonal to the vertical plane.

According to this aspect, in a case of responding via the output device, based on predetermined processing that requires a predetermined amount of time or more as to an input instruction by a user input via the input device, the weight driving mechanism is caused to be rotated to where the certain direction in which the weight driving mechanism reciprocally moves the weight is orthogonal to a vertical plane including an imaginary line connecting the display unit and the shaft, and the weight is caused to be reciprocally driven in the certain direction orthogonal to the vertical plane. In this case, part of the face of the robot displayed on the display unit makes up a mouth or nose, for example.

Thus, the robot performs actions of rocking to the left and right with the position of the mouth or nose as the front, for example, in a case where a predetermined amount of time or longer is required for responding to a user inquiry. This action represents a body movement of the robot feeling troubled and rocking its body to the left and right.

Accordingly, even in a case of a spherical robot that does not have hands or feet, where there are restrictions in communicating the progress state of internal processing to the user, the user can be notified that the robot is currently performing processing during the conversation with the user using moving actions of the weight, without displaying that processing is being performed on the surface of the spherical robot. As a result, the user can tell whether the robot is currently performing processing or is not moving due to a malfunction, simply by viewing the external appearance of the robot.

Also, in the above aspect, for example, the control circuit may stop reciprocal movement of the weight at a default position of the weight when outputting contents of the response via the output device.

According to this aspect, the reciprocal movement of the weight is stopped at a default position of the weight when outputting contents of the response via the output device. Accordingly, even in a case of expressing the robot feeling troubled by rocking the robot to the left and right while performing the predetermined processing, the robot returns to its proper attitude and responds to the query from the user when outputting the contents of the response via the output device. Accordingly, an unnatural situation can be avoided in which the robot is rocked to the left and right during the predetermined processing, and responds in a state partway through the robot rocking to the left and right.

Also, in the above aspect, for example, the predetermined direction in which the weight driving mechanism reciprocally moves the weight may be made to be orthogonal to a vertical plane including an imaginary line connecting a center portion of the display unit and the shaft.

According to this aspect, the direction in which the weight is reciprocally moved is set as a direction direct to a vertical plane including an imaginary line connecting the center portion of the display unit and the shaft, so the robot can perform the actions of rocking the robot to the left and right with the display portion representing part of the face of the robot at the front. Thus, the user can be notified more effectively that the robot is in thought.

Also, in the above aspect, for example, the predetermined processing may be made up of two or more procedures, the control circuit causing a distance of reciprocal movement of the weight from the default position of the weight to be reduced, each time each of the two or more procedures ends.

According to this aspect, the reciprocal movement of the weight from the default position is reduced as the procedures of the predetermined processing progress, so the user can be notified of the state of progress of the predetermined processing through the actions of the robot.

Also, in the above aspect, for example, a camera provided to the frame, and a communication circuit that is provided to the frame and connected to an external network, may further be provided. The predetermined processing may be image recognition processing performed at an external server connected via the external network.

The processing load of image recognition processing is excessive, and accordingly the processing is often performed at an external server. In this case, a predetermined amount of time or more is taken until the processing result is obtained. In the present aspect, the robot performs actions of rocking to the left and right until the processing results are obtained, even in a case where the predetermined processing is executed at an external server. Accordingly, the user can be notified that internal processing is being executed.

Also, in the above aspect, for example, in a case of responding based on the image recognition processing, the control circuit uses the camera to cause an object to be recognized to be imaged, uses the communication circuit to cause an image of the object to be recognized, which has been imaged, to be transmitted to the external server via the external network, uses the communication circuit to cause recognition results of the image of the object to be recognized from the external server to be received, and causes the received recognition results to be output via the output device.

According to this aspect, image recognition processing, of which the processing load is excessive, is executed at an external server, so it is sufficient for the robot to image the object to be recognized and receive the recognition results from the external server, so the processing load of the robot can be reduced.

Also, in the above aspect, for example, included are: a spherical casing; a frame that is disposed on an inner side portion of the casing; a display unit that is provided to the frame, and displays at least part of a face of the robot; a camera that is provided to the frame; an input device that is provided to the frame; an output device that is provided to the frame; a communication circuit that is provided to the frame and connected to an external network; a set of driving wheels that are provided to the frame, the driving wheels coming into contact with an inner circumferential face of the casing and rotating the casing; a shaft that is provided to the frame, and extends in a perpendicular direction as to driving axes of the set of driving wheels; a weight driving mechanism that is provided to the frame, and causes a weight to reciprocally move in a certain direction; a rotating mechanism that causes the weight driving mechanism to rotate centered on the shaft; and a control circuit that, in a case where image recognition processing is necessary to respond as to an input instruction by a user input via the input device, uses the camera to cause an object to be recognized to be imaged, causes an image of the object to be recognized that has been imaged, to be transmitted, via an external network, to an external server connected via the external network, causes recognition results of the image of the object to be recognized to be received from the external server connected via the external network, and causes the recognition results received via the output device to be output. In a case where recognition results of the image of the object to be recognized by the external server are necessary, the control circuit causes the weight driving mechanism to be rotated to where the certain direction in which the weight driving mechanism reciprocally moves the weight to be orthogonal to a vertical plane including an imaginary line connecting the display unit and the shaft, and causes the weight to be reciprocally moved in the certain direction orthogonal to the vertical plane.

According to this aspect, in a case where recognition results of the image of the object to be recognized by the external server connected via the external network are necessary, the weight driving mechanism is caused to be rotated to where the certain direction in which the weight driving mechanism reciprocally moves the weight to be orthogonal to a vertical plane including an imaginary line connecting the display unit and the shaft, and the weight is caused to be reciprocally moved in the certain direction orthogonal to the vertical plane. In this case, part of the face of the robot displayed on the display unit makes up a mouth or nose, for example.

Thus, the robot performs actions of rocking to the left and right with the position of the mouth or nose as the front, for example, in a case where image recognition processing is required for responding to a user inquiry. This action represents a body movement of the robot feeling troubled and rocking its body to the left and right.

Accordingly, even in a case of a spherical robot that does not have hands or feet, where there are restrictions in communicating the progress state of internal processing to the user, the user can be notified that the robot is currently performing processing during the conversation with the user using moving actions of the weight, without displaying that processing is being performed on the surface of the spherical robot. As a result, the user can tell whether the robot is currently performing processing or is not moving due to a malfunction, simply by viewing the external appearance of the robot.

Also, in the above aspect, for example, after having received the recognition results of the image of the object to be recognized, the control circuit may cause the reciprocal movement of the weight to be stopped at a default position of the weight, and cause the recognition results that have been received to be output via the speaker.

According to this aspect, the reciprocal movement of the weight is stopped at a default position of the weight when stopping the reciprocal movement of the weight after having received the recognition results of the image of the object to be recognized. Accordingly, even in a case of expressing the robot feeling troubled by rocking the robot to the left and right while performing the image recognition processing, the robot returns to its proper attitude and responds to the query from the user when receiving the results of the image recognition processing. Accordingly, an unnatural situation can be avoided in which the robot is rocked to the left and right during the image recognition processing, and responds in a state partway through the robot rocking to the left and right.

Also, in the above aspect, for example, memory that stores reference data for image recognition may further be included. In a case where judgement is made that recognition results of the image of the object to be recognized by the external server are not necessary for responding to the speech instruction by the user, and that the response can be made by image recognition processing of the object to be recognized based on the reference data for image recognition processing stored in the memory, the control unit may cause recognition results based on the reference data to be output via the output device, without performing control to cause the weight to be reciprocally moved in the predetermined direction orthogonal to the vertical plane.

For example, an arrangement may be made where memory is provided within the robot, and facial recognition of the user or the like is performed using reference data for image recognition that is stored in the memory.

In a case where the user asks the robot, "Who am I?" for example, there is no need for recognition results of an image of the object to be recognized by the external server, and it is sufficient to reference the reference data for image recognition stored in the memory within the robot. Also, in a case where the user holds up two fingers, the index finger and the middle finger, and asks the robot "How many is this?", there is no need for recognition results of an image of the object to be recognized by the cloud server, and it is sufficient to reference the reference data for image recognition stored in the memory within the robot. In such cases, the user is hardly made to wait at all.

Accordingly, in such a case, recognition results based on the reference data are output via the output device, without performing control to cause the weight to reciprocally move in the certain direction orthogonal to the imaginary line.

Also, in the above aspect, for example, the control circuit may cause the certain direction in which the weight driving mechanism reciprocally moves the weight to be orthogonal to a vertical plane including an imaginary line connected a center portion of the display unit and the shaft.

According to this aspect, the direction in which the weight is reciprocally moved is set as a direction direct to a vertical plane including an imaginary line connecting the center portion of the display unit and the shaft, so the robot can perform the actions of rocking the robot to the left and right with the display portion representing part of the face of the robot at the front. Thus, the user can be notified more effectively that the robot is in thought.

Also, in the above aspect, for example, the image recognition processing may be made up of two or more procedures, the control circuit causing a distance of reciprocal movement of the weight from the default position of the weight to be reduced, each time each of the two or more procedures ends.

According to this aspect, the distance of reciprocal movement of the weight is reduced as the procedures of the predetermined processing advance, so the user can be notified of the state of progress of the predetermined processing through the actions of the robot.

### Industrial Applicability

A robot according to exemplary embodiments of the present disclosure is useful in notifying a user of the state of progress of internal processing. Reference Signs List

- F: movement direction
- L1: imaginary line
- M: stage count
- N: stage No.
- R: maximum amplitude
- S: movement width
- T: movement target position
- 1: robot
- 2R: movement range
- 3: cloud server
- 4: mobile terminal
- 9: control circuit
- 101: casing
- 102: frame
- 103: first rotating plate
- 104: second rotating plate
- 105: first display unit
- 106: second display unit
- 107: third display unit
- 108: camera
- 109: control circuit
- 110: first driving wheel
- 111: second driving wheel
- 112: first motor
- 113: second motor
- 114: counterweight
- 115: guide shaft
- 116: swing arm
- 117: rotating motor
- 118: rotating shaft
- 119: belt
- 120: motor pulley
- 201: main control unit
- 202: speech information output control unit
- 203: facial recognition processing unit
- 204: speech recognition processing unit
- 205: display information output control unit
- 206: memory
- 210: communication unit
- 211: display unit
- 212: casing driving wheels
- 213: shaft control unit
- 214: casing driving wheel control unit
- 215: weight driving mechanism
- 215: driving mechanism control unit
- 216: speaker
- 217: microphone
- 218: weight driving mechanism
- 301: communication unit
- 302: processing unit
- 1500: robot system

## Claims

1. A robot, comprising:
a spherical casing;
a frame that is disposed on an inner side portion of the casing;
an input device that is provided to the frame;
an output device that is provided to the frame;
a set of driving wheels that are provided to the frame, the driving wheels coming into contact with an inner circumferential face of the casing and rotating the casing;
a shaft that is provided to the frame, and extends in a perpendicular direction as to driving axes of the set of driving wheels;
a weight driving mechanism that is provided to the frame, and causes a weight to reciprocally move in a certain direction;
a rotating mechanism that causes the weight driving mechanism to rotate centered on the shaft; and
a control circuit that, in a case of responding via the output device, based on predetermined processing that requires a predetermined amount of time or more as to an input instruction by a user input via the input device, causes the weight driving mechanism to be rotated to where the certain direction in which the weight driving mechanism reciprocally moves the weight is orthogonal to an advancing direction by the set of driving wheels, and causes the weight to be reciprocally driven in the certain direction orthogonal to the advancing direction, during the predetermined processing.

2. The robot according to Claim 1,
wherein the control circuit stops reciprocal movement of the weight at a default position of the weight when outputting contents of the response via the output device.

3. The robot according to Claim 1,
wherein the predetermined processing is made up of two or more procedures,
and wherein the control circuit causes a distance of reciprocal movement of the weight from the default position of the weight to be reduced, each time each of the two or more procedures ends.

4. The robot according to Claim 1, further comprising:
a display unit that is provided to the frame toward the advancing direction, and displays at least part of a face of the robot.

5. The robot according to Claim 1, further comprising:
a camera, provided to the frame with a photographing direction facing the advancing direction.

6. The robot according to Claim 1, further comprising:
a camera, provided to the frame with a photographing direction facing the advancing direction; and
a communication circuit that is provided to the frame and connected to an external network,
wherein the predetermined processing is image recognition processing performed at an external server connected via the external network.

7. The robot according to Claim 6,
wherein, when responding based on the image recognition processing, the control circuit
uses the camera to cause an object to be recognized to be imaged,
uses the communication circuit to cause an image of the object to be recognized, which has been imaged, to be transmitted to the external server via the external network,
uses the communication circuit to cause recognition results of the image of the object to be recognized from the external server to be received, and
causes the received recognition results to be output via the output device.

8. The robot according to any one of Claims 1 through 6,
wherein the input device is a microphone,
and wherein the input instruction by the user input via the input device is an instruction by speech.

9. The robot according to Claim 7,
wherein the output device is a speaker.

10. A robot, comprising:
a spherical casing;
a frame that is disposed on an inner side portion of the casing;
a display unit that is provided to the frame, and displays at least part of a face of the robot;
an input device that is provided to the frame;
an output device that is provided to the frame;
a set of driving wheels that are provided to the frame, the driving wheels coming into contact with an inner circumferential face of the casing and rotating the casing;
a shaft that is provided to the frame, and extends in a perpendicular direction as to driving axes of the set of driving wheels;
a weight driving mechanism that is provided to the frame, and causes a weight to reciprocally move in a certain direction;
a rotating mechanism that causes the weight driving mechanism to rotate centered on the shaft; and
a control circuit that, in a case of responding via the output device, based on predetermined processing that requires a predetermined amount of time or more as to an input instruction by a user input via the input device, causes the weight driving mechanism to be rotated to where the certain direction in which the weight driving mechanism reciprocally moves the weight is orthogonal to a vertical plane including an imaginary line connecting the display unit and the shaft, and causes the weight to be reciprocally driven in the certain direction orthogonal to the vertical plane.

11. The robot according to Claim 10,
wherein the control circuit stops reciprocal movement of the weight at a default position of the weight when outputting contents of the response via the output device.

12. The robot according to Claim 10,
wherein the control circuit makes the predetermined direction in which the weight driving mechanism reciprocally moves the weight to be orthogonal to a vertical plane including an imaginary line connecting a center portion of the display unit and the shaft.

13. The robot according to Claim 10,
wherein the predetermined processing is made up of two or more procedures,
and wherein the control circuit causes a distance of reciprocal movement of the weight from the default position of the weight to be reduced, each time each of the two or more procedures ends.

14. The robot according to Claim 10, further comprising:
a camera provided to the frame; and a communication circuit that is provided to the frame and connected to an external network,
wherein the predetermined processing is image recognition processing performed at an external server connected via the external network.

15. The robot according to Claim 14,
wherein, when responding based on the image recognition processing, the control circuit
uses the camera to cause an object to be recognized to be imaged,
uses the communication circuit to cause an image of the object to be recognized, which has been imaged, to be transmitted to the external server via the external network,
uses the communication circuit to cause recognition results of the image of the object to be recognized from the external server to be received, and
causes the received recognition results to be output via the output device.

16. A robot, comprising:
a spherical casing;
a frame that is disposed on an inner side portion of the casing;
a display unit that is provided to the frame, and displays at least part of a face of the robot;
a camera that is provided to the frame;
an input device that is provided to the frame;
an output device that is provided to the frame;
a communication circuit that is provided to the frame and connected to an external network;
a set of driving wheels that are provided to the frame, the driving wheels coming into contact with an inner circumferential face of the casing and rotating the casing;
a shaft that is provided to the frame, and extends in a perpendicular direction as to driving axes of the set of driving wheels;
a weight driving mechanism that is provided to the frame, and causes a weight to reciprocally move in a certain direction;
a rotating mechanism that causes the weight driving mechanism to rotate centered on the shaft; and
a control circuit that, in a case where image recognition processing is necessary to respond as to a speech instruction by a user input via the input device, uses the camera to cause an object to be recognized to be imaged, causes an image of the object to be recognized that has been imaged, to be transmitted, via an external network, to an external server connected via the external network, causes recognition results of the image of the object to be recognized to be received from the external server connected via the external network, and causes the received recognition results to be output via the output device,
wherein, in a case where recognition results of the image of the object to be recognized by the external server are necessary, the control circuit causes the weight driving mechanism to be rotated to where the certain direction in which the weight driving mechanism reciprocally moves the weight to be orthogonal to a vertical plane including an imaginary line connecting the display unit and the shaft, and causes the weight to be reciprocally moved in the certain direction orthogonal to the vertical plane.

17. The robot according to Claim 16,
wherein, after having received the recognition results of the image of the object to be recognized, the control circuit causes the reciprocal movement of the weight to be stopped at a default position of the weight, and causes the recognition results that have been received to be output via the speaker.

18. The robot according to Claim 16, further comprising:
memory that stores reference data for image recognition,
wherein, in a case where judgement is made that recognition results of the image of the object to be recognized by the external server are not necessary for responding to the speech instruction by the user, and that the response can be made by image recognition processing of the object to be recognized based on the reference data for image recognition processing stored in the memory, the control unit causes recognition results based on the reference data to be output via the output device, without performing control to cause the weight to be reciprocally moved in the certain direction orthogonal to the vertical plane.

19. The robot according to any one of Claims 16 through 18,
wherein the control circuit causes the certain direction in which the weight driving mechanism reciprocally moves the weight to be orthogonal to a vertical plane including an imaginary line connected a center portion of the display unit and the shaft.

20. The robot according to any one of Claims 16 through 19,
wherein the image recognition processing is made up of two or more procedures,
and wherein the control circuit causes a distance of reciprocal movement of the weight from the default position of the weight to be reduced, each time each of the two or more procedures ends.
